# EUROPEAN PATENT APPLICATION

(11) **EP 1 217 786 A2**
(43) Date of publication of application: **26.06.2002**
(21) Application number: 01403119.9
(22) Date of filing: 05.12.2001
(51) Int. Cl.: H04L 12/24

(54) **Method for managing event communications between Agent and Manager processing entities in a telecommunication network management system**

(30) Priority: 21.12.2000 IT MI002768
(71) Applicant: ALCATEL, 75008 Paris (FR)
(72) Inventor: Canali, Massimo, 20059 Vimercate (Milano) (IT); Molaschi, Stefano, 20026 Novate Milanese (Milano) (IT)
(74) Representative: Colombo, Stefano Paolo

(57) **Abstract**

A method is described for the management of the communications of events (such as e.g. alarms) between Agent- and Manager- type processing entities, in particular for connectionless communication protocols, in a telecommunication network management system, that implements a procedure adapted to increase the reliability of the event communication system, whereby the Agent sends alert notifications to the Manager to report the occurrence of new events. The alert notifications can be sent at fixed timeout and/or after a number of generated events. The Manager can however maintain a timeout polling mechanism for the periodic reading of the events in the Agent, and further the Agent can send very urgent or important notifications to the Manager.

## Description

The present invention pertains to a method for the management of event communications between Agent- and Manager- type processing entities in a telecommunications network management system, in particular for connectionless communication protocols.

As known, a telecommunication network management system comprises processing entities, hereinafter called Agent, physically located in the network elements and at least one processing entity, hereinafter called Manager, with usually centralized control purpose. Said Agent and Manager entities exchange information through communication protocols.

The usage of communication protocol types, hereinafter termed connectionless, is prevailing, namely protocols that do not provide for establishing logical connections between the various Agent and Manager entities for the information exchange. Thsi information is sent under the form of messages only when necessary, so as to optimize the use of resources of the transmission channel.

Various types of messages exchanged between Agent and Manager, and vice versa, exist: for instance one type is a request-response interaction whereby the Manager sends a request to an Agent that accordingly responds; another type is still a request-response interaction between two Manager entities.

In these circumstances the information flow is anyway under the control of the Manager, which in response to a request message, expects to receive a given type of response message accordingly.

A further known type of messages is the one that allows the transmission of information on events, such as, for instance, the alarm signalling, from the Agent entities to the Manager. In these circumstances, instead, the Manager is not able to foresee when a message is sent by the Agent, since it is not sent at a uniform, and therefore predictable, rate, and upon request from the Manager, but instead only when it is necessary, at times unfixed and decided by the Agent. Moreover the Agent does not expect responses of the type "acknowledgement of receipt" from the Manager.

Hence the problem that arises is the possible loss of the messages related to these events, in some instances, such as when excessive message queues are created, or in case of network connection loss, or lack of response from the Manager.

A partial solution to these problems can be put into effect through the use of the known timeout polling procedure: periodically the Manager reads the list of events that the Agent stores inside it.

This known procedure however is not yet free from drawbacks since, if the message queue becomes excessive in the Agent, between a Manager's request and the next one, there is the risk that one part of the messages is lost by overflow of the storage capacities in the Agent.

Therefore, an object of the present invention is to overcome all the aforesaid drawbacks and to indicate a method for the management of communications of events (such as e.g. alarms) between processing entities of Agent - and Manager - type in a telecommunications network management system, in particular for connectionless communication protocols, that carries out a procedure whereby the Agent sends alert notifications to the Manager to signal the occurrence of new events.

The alert notifications can be sent at fixed timeouts or after a number of events generated, or with a combination of these two techniques.

All the generated events are stored in an event storage of the Agent, to avoid loosing them because of unreliability of the type of protocol used. Moreover, the Agent can anyway send the notifications concerning the event of greater urgency or importance, just occurred, to the Manager.

In order to achieve these objectives, the present invention provides a method for the management of event communications between Agent and Manager processing entities, as well as a telecommunications network management system and a corresponding network so modified as to include said method, as best described in the claims that form an integral part of the present description.

The method for the management of event communications subject of the invention has several advantages.

The Manager can however maintain a timeout polling mechanism, as described above, for the periodic reading of the events in the Agent, since the alarm notification procedure in accordance with the invention is not in conflict with the polling and can be added thereto.

The Manager may discover the presence of a huge number of events stored in the Agent even before its timeout expiration, and therefore it will be able to read said events in the Agent before the Agent's memory eventually overflows thus loosing information.

The size of the event storage is critical for the Agent. Hence by using the mechanism subject matter of the invention, the reliability of the entire procedure is increased. The presence of the event storage is indeed necessary because of the behaviour of the connectionless protocol used, so as to be sure that events are not lost, while the alert mechanism reduces the problems associated with the management of full-memory and bursty alarms (many alarm events generated in a very short time) conditions.

Further objects and advantages of the present invention will become clear from the following detailed description of an embodiment thereof and from the attached drawings given by way of a mere non limiting example, wherein:
- In Fig. 1 there is depicted a basic diagram of the operation of the management method of event communications between MANAGER and AGENT elements, subject matter of the present invention.
- In Fig. 2 there are represented examples of time trend of the alert notifications contemplated by the method of the present invention.

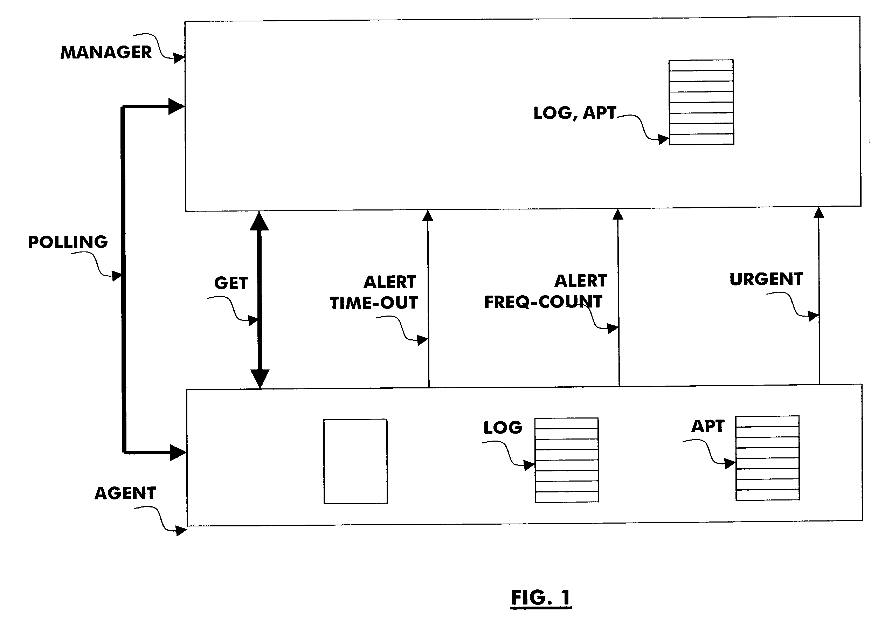

In Fig. 1, through a polling mechanism POLLING known per se, the Manager periodically asks the Agent to receive the contents of the objects LOG and APT, that form the event storages, and store them inside it; these objects are composed of storage areas containing the events that the Agent detects, such as, for instance, the alarms, and that are to be communicated to the Manger. LOG contains all the event arising and clearing information as historical archive, while APT contains only elements still active.

The connectionless protocol utilized is the known SNMP (Simple Network Management Protocol), and the syntax used for the programming is the one defined by the IETF (Internet Engineering Task Force) standard.

This syntax, for instance, provides for the use of GET macro-instructions for the Polling procedure, through which the Manager asks the Agent to send the events stored into LOG and APT: the Agent sends them in the form of messages conformed in accordance with the protocol used.

Besides this systematic procedure, in accordance with the present invention, the Agent sends alert notifications to highlight the occurrence of new events, such as the alarms.

These alert notifications can be sent at fixed timeout ALERT TIMEOUT, or after a number of events generated ALERT FREQ-COUNT, or with a combination of these two modes.

The Manager can define the timeout period and/or the frequency, in the sense of number of events, that the Agent must count before sending the new alert notification.

The Agent can reset both the timeout period and the frequency counter whenever an alert notification is sent to the Manager.

If there are no new events between two subsequent notifications, the Agent can avoid sending the last notification so as not to uselessly deploy transmission resources.

The approach described above reduces the transmission of useless information.

This alert notification mechanism can be applied to all types of notifications, such as e.g. the alarms, and others used by the Agent to communicate modifications of its internal configuration. This stimulates the Manager to carry out a reading of the events stored into the Agent without awaiting the timeout expiration of the polling procedure, thus avoiding the loss of events. These further readings by the Manager can be carried out with the same procedure contemplated for the polling, by resetting or not the normal timeout polling: hence the subsequent timeout polling can be carried out by the Manager at the normal expiration (the reading following the notification to the Agent is added to the regular ones whose rate is not modified), or by resetting the timeout period after the reading following the Agent's notification (the reading following the notification of the Agent replaces the regular one).

Moreover, the Agent can send the URGENT alert notifications, namely the notifications of greater urgency or importance as soon as they occur, to the management system, so that the Manager can decide at once the actions to be taken. Therefore, a "filter" object that contains the list of urgent events can be added: the Agent verifies the urgency of each event by comparing it with the filter.

The general structure of the messages containing the alert notifications and/or the urgent notifications as well as the message sending procedure are known per se and as contemplated by the communication protocol used, such as e.g. SNMP.

The main information contained in the alert notification is the identifier of the last event generated by the Agent, so that the Manager can univocally identify the last notification. The Manager can thus ascertain if said notification corresponds to the one eventually already present therein; otherwise it starts the reading procedure in the Agent.

The alert notification does not need to be itself stored in the Agent.

In the following an example of alert mechanism is described which uses the language of the SNMP protocol, but the mechanism is intended as applicable to all the connectionless protocol in which autonomous messages from the Agent to the Manager are defined.

The structure of the notification that the SNMP Agent sends to the Manager depends on the type of event. The related SNMP macroinstruction "Trap" or "Notification" is comprised of notification name and of the following clauses:
- Objects: defines an ordered sequence of possible objects such as:"SNMP Instance" that identifies the object that has generated the event, and "gravity" of the event;
- Status: indicates if this definition is current (actual) or supported by compatibility with previous versions;
- Description: contains a textual definition of the meaning of the notification.

Hence the alert notification will have the following structure:
- Notification Name: it is the object identifier (OID) of the SNMP notification;
- SNMP Notification Objects: contains the list of objects necessary to define the information used by the management system. These objects are related to the last event generated and univocally identify it, and they represent:-Notification identifier: univocal identifier of the notification;
   - Notification generation time: instant of generation of the last generated notification event.

The following example of alert notification object is written by using the known IETF syntax standard:

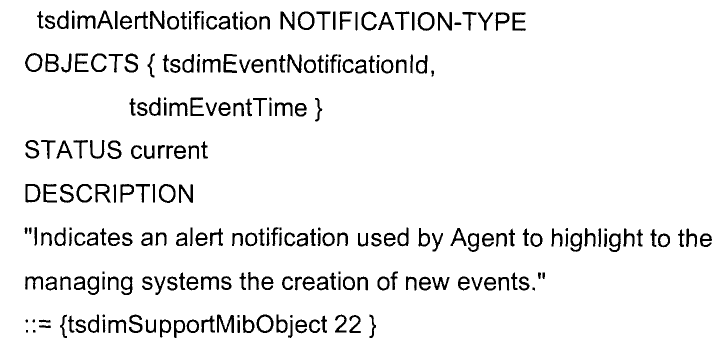

The alert notification does not need to have associated therewith in the clause "object" an SNMP Instance Identifier and an event "gravity" that allow the identification of the Agent, since the owner of this notification is still the Agent and the management system is able to discover which Agent has generated it. Moreover, the notification identified by the above-mentioned fields "Notification Identifier" and "Notification Generation Time" can be identified by the management system in the objects APT and LOG.

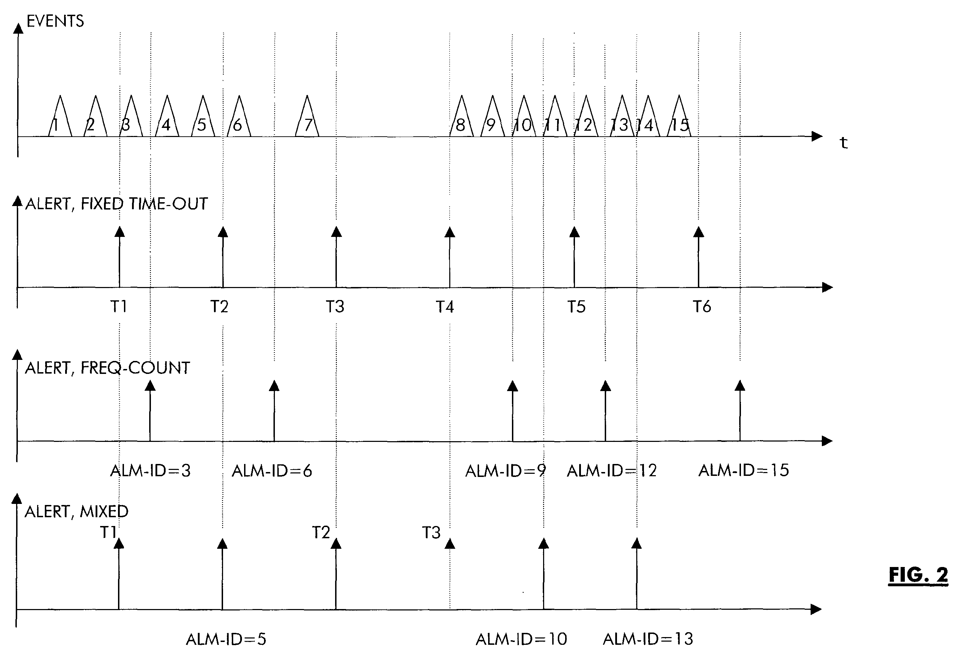

Fig. 2 illustrates examples of time evolution of the alert notifications.

The alert notifications can be sent at fixed timeouts ALERT TIME-OUT, and/or after a number of generated events ALERT FREQ-COUNT. A combination of these two techniques may also be used.

As already said, the Manager defines the timeout period and/or the notification frequency, in the sense of number of events that the Agent has to count before sending the new alert notification.

In Fig. 2 an example of time sequence of events 1, ..., 15 generated and stored in the Agent is highlighted in the time diagram EVENTS.

According to the sending mode at fixed timeouts (ALERT, TIME-OUT), the alert notifications are sent at regular intervals T1, TS, ..., T6 carrying the information on the last event occurred: in T1 the event is 2, in T2 it is 5, in T3 it is 7, and so on. The notification corresponding to the time T4 could not be sent since no events occur between times T3 and T4, and therefore the last event at time T4 is still the number 7.

According to the sending mode after a number of generated events (ALERT FREQ-COUNT), the alert notifications are sent every N events occurred: in the figures for instance every three events: when the event 3 (ALM-ID=3), then 6 (ALM-ID=6), then 9 (ALM-ID=9) occur, and so on.

According to the mixed sending mode (ALERT MIXED), a combination of the two modes described above is carried out, so that the next alert notification will be sent either after N subsequent events generated (ALERT FREQ-COUNT), or at the expiration of the fixed interval (ALERT TIME-OUT), depending on which occurs first, by continuous reset of the two time and frequency counters, to avoid a double notification message with the same information.

In the figure, for instance, the sequence is: T1, ALM-ID=5, T2, T3, ALM-ID=10, ALM-ID=13, and so on. The notification in T3 indeed will not be sent, since between T2 and T3 no new events occur.

From the above description it is then apparent how a telecommunications network management system and the related network can be obtained suitably modified so as to include the operations contemplated by the event communication management method, subject matter of the invention.

From the basic knowledge and from the above description the person skilled in the art is able to realize the subject matter of the invention.

The present invention may advantageously be realized by means of a computer program comprising program-encoding means adapted to carry out one or more steps of the method when said program is run on a computer. Therefore, the scope is intended to cover such a computer program as well as a computer readable medium having a message recorded thereon, said computer readable medium comprising program encoding means adapted to carry out one or more steps of the method when said program is run on a computer.

Many changes, modifications, variations of the present inventions will be apparent to those skilled in the art having considered the present description and the attached drawing which illustrate preferred embodiment thereof. All of such changes, modifications, variations which do not depart from the spirit and the scope of the invention are considered to be covered by the invention.

## Claims

1. Method for the management of event communications between Agent - and Manager - type processing entities in a telecommunications network management system, utilizing a connectionless communication protocol between Agent and Manager, **characterized in that** it contemplates a step in which the Agent sends alert notifications to the Manager to report the occurrence of new events.

2. Method according to claim 1, **characterized in that** said alert notifications can be sent at fixed timeouts (ALERT TIME - OUT).

3. Method according to claim 1, **characterized in that** said alert notifications ca be sent after a number of generated events (ALERT FREQ-COUNT).

4. Method according to claim 2 or 3, **characterized in that** said alert notifications can be sent according to a combination of said two modes, at fixed timeouts and after a number of generated events, so that the next alert notification will be sent either after N subsequent events generated or at the expiration of said fixed timeout, depending on the mode occurring first in the time.

5. Method according to any of claims 2 to 4, **characterized in that** the Manager defines said fixed timeout, or said number of generated events.

6. Method according to claim 5, **characterized in that** the Agent is able to reset said fixed timeout, or said number of generated events, whenever an alert notification is sent to the Manager.

7. Method according to any of the preceding claims, **characterized in that** if there are no new events, the Agent does not send new notifications.

8. Method according to any of the preceding claims, **characterized in that** said Alert notification contains the information that identifies the last event guaranteed by the Agent.

9. Method according to any of the preceding claims, **characterized in that** the Alert notification has the following structure:
• Notification Name: object identifier (OID) of the notification (SNMP);
• Notification Objects: contains the list of objects necessary to define the information used by the Manager, said objects representing:
- Notification identifier: univocal identifier of the notification;
- Notification Generation Time: generation instant of the event of the last generated notification.

10. Method according to any of the preceding claims, **characterized in that** it further provides the steps of:
- storage of the events in the Agent (LOG, APT);
- periodic reading of said events in the Agent (POLLING) by the Manager.

11. Method according to claim 10, **characterized in that** the Manager performs a reading of the events stored in the Agent after receiving said alert notifications, without awaiting the expiration of said periodic reading.

12. Method according to any of the preceding claims, **characterized in that** it further provides the step in which the Agent sends urgent notifications, concerning events of greater urgency or importance, to the Manager.

13. Telecommunications network management system, **characterized in that** it comprises means for implementing a method for the management of event communications between Agent - and Manager - type processing entities as in any of claims 1 to 12.

14. Telecommunications network **characterized by** comprising a management system as in claim 13.

15. Computer program comprising program encoding means designed to carry out one or more steps of claims 1 to 12 when said program is run on a computer.

16. Computer-readable medium having a message recorded thereon, said computer-readable medium comprising program encoding means designed to carry out one or more steps of claims 1 to 12 when said program is run on a computer.
